# DEMANDE DE BREVET EUROPEEN

(11) **EP 0 576 761 A1**
(43) Date de publication de la demande: **05.01.1994**
(21) Numéro de dépôt: 92401924.3
(22) Date de dépôt: 03.07.1992
(51) Int. Cl.: B62D 25/16

(54) **Dispositif anti-projections d'eau pour véhicules automobiles**

(71) Demandeur: Renaudet, Patricia, F-89720 Villeblevin (FR); Renaudet, Stéphane, F-89720 Villeblevin (FR); Chassaing, Fabrice, F-78000 Versailles (FR)
(72) Inventeur: Chassaing, Claude, F-78000 Versailles (FR); Renaudet, Daniel, F-89720 Villeblevin (FR)
(74) Mandataire: Moncheny, Michel

(57) **Abrégé**

L'invention concerne un dispositif destiné à réduire ou éliminer les projections d'eau ou de neige par les roues (11,12) d'un véhicule, caractérisé en ce qu'il comprend au moins une prise d'air (2,3) débouchant dans au moins un canal longitudinal collecteur d'eau (5,6) auquel la zone arrière de chaque passage de roue (13,14) est reliée par au moins un conduit (15,16) constituant un capteur d'eau par dépression.

Le canal longitudinal (5,6) débouche, à son extrémité opposée à la prise d'air (2,3), dans un séparateur
(7-9) du mélange d'air et d'eau provenant des capteurs d'eau.

Application aux véhicules de fort tonnage.

## Description

La présente invention concerne les véhicules automobiles et, plus précisément, un dispositif destiné à réduire ou à éliminer les projections d'eau ou de neige créées par les roues d'un véhicule automobile.

Lors de la circulation d'un véhicule automobile sur une route fortement mouillée, par exemple par temps de neige ou de pluie, l'air qui s'engouffre sous la caisse du véhicule subit une surpression et il pulvérise l'eau soulevée par les roues du véhicule, ce qui crée une sorte de brouillard constitué d'eau pulvérisée qui est projetée vers l'arrière mais également latéralement, ce qui pose des problèmes de visibilité pour les véhicules qui suivent ou qui croisent le véhicule projetant ce brouillard.

Ces projections d'eau occasionnent une perte de visibilité presque totale lorsque la route est fortement mouillée et posent de gros problèmes lors du dépassement ou du croisement des véhicules. Le phénomène est particulièrement grave pour les véhicules de fort tonnage (poids lourds ou transports en commun) et cela pose à la circulation routière en temps de pluie de graves problèmes de sécurité et occasionne souvent de très graves accidents.

La présente invention se propose de fournir un dispositif qui permet d'éliminer ou de réduire fortement ces projections d'eau de manière à supprimer les problèmes de visibilité cités ci-dessus.

A cet effet, l'invention a pour objet un dispositif destiné à réduire ou éliminer les projections d'eau ou de neige par les roues d'un véhicule, caractérisé en ce qu'il comprend au moins une prise d'air débouchant dans au moins un canal longitudinal collecteur d'eau auquel la zone arrière de chaque passage de roue est reliée par au moins un conduit constituant un capteur d'eau par dépression.

L'invention est basée sur la récupération de l'air sous pression créée par la vitesse du véhicule; cet air peut être capté à l'avant du véhicule ou sur le côté de ce dernier.

Selon une autre caractéristique de l'invention, le canal longitudinal débouche, à son extrémité opposée à la prise d'air, dans un séparateur du mélange d'air et d'eau provenant des capteurs d'eau. De cette manière, l'eau est séparée et peut être évacuée sous forme entièrement liquide, par exemple sur le côté du véhicule. Il s'agit alors d'un courant d'eau qui ne crée pas de problème de visibilité.

Avantageusement, le séparateur est un séparateur à deux étages comportant une grille de séparation horizontale, au moins un orifice d'entrée du mélange air et eau disposé en dessous de ladite grille et relié au canal longitudinal, un orifice de sortie de l'air disposé au-dessus de ladite grille et un orifice de sortie de l'eau disposé au-dessous de ladite grille.

Selon une autre caractéristique de l'invention, le dispositif comporte au moins un conduit pulseur reliant le canal longitudinal à au moins un passage de roue, ledit conduit pulseur étant disposé en amont du conduit constituant le capteur d'eau du passage de roue par rapport à la direction de la circulation de l'air dans le canal longitudinal. Ce conduit pulseur permet d'accélérer la sortie de l'eau soulevée par la roue dans le conduit capteur. Il peut également servir à diriger un flux d'air de refroidissement sur des éléments du véhicule susceptibles de s'échauffer, tels que les moyeux ou les freins.

Selon encore une autre caractéristique de l'invention, le canal longitudinal comporte des moyens d'augmentation de la vitesse de l'air dans ce canal ; ils sont avantageusement constitués par au moins un rétrécissement de la section du canal ; on peut également utiliser une pompe d'accélération disposée dans le canal.

Avantageusement, le canal longitudinal comporte au moins une tubulure de dérivation qui est destinée au refroidissement d'éléments constitutifs du véhicule tels que des freins ou des moyeux. De cette manière, on utilise l'air en surpression se trouvant dans le canal pour refroidir des pièces soumises à un échauffement important telles que les freins.

Selon une autre caractéristique de l'invention, le dispositif comporte au moins une prise d'air latérale auxiliaire reliée au canal. Cette prise d'air latérale peut servir par exemple à alimenter un dispositif de chauffage ou de climatisation de l'habitacle du véhicule.

Dans le cas d'un véhicule articulé formé d'au moins de deux éléments, le dispositif comporte au moins un conduit souple raccordant entre eux les canaux longitudinaux d'éléments voisins du véhicule. De cette manière, il est possible d'effectuer la prise d'air uniquement sur le véhicule tracteur pour alimenter l'ensemble du dispositif du véhicule articulé.

Selon un mode de réalisation de l'invention, dans le cas de véhicules, tels que des poids lourds, comportant un dispositif anti-encastrement latéral, le canal longitudinal est au moins partiellement intégré dans un dispositif d'anti-encastrement.

D'autres caractéristiques et avantages de l'invention ressortiront de la description qui suit d'exemples de réalisation de l'invention, faite en se référant aux dessins annexés sur lesquels :
- la figure 1 est une vue schématique en plan d'un premier mode de réalisation comportant deux canaux longitudinaux ;
- la figure 2 est une vue schématique en plan d'un deuxième mode de réalisation comportant un seul canal longitudinal ;
- les figures 3 et 4 illustrent schématiquement en vue longitudinale et en vue de dessus un dispositif selon l'invention monté sur une semi-remorque ;
- la figure 5 est une vue schématique en coupe longitudinale d'un autre mode de réalisation de l'invention ;
- la figure 6 est une vue partielle en coupe correspondant à la figure 5 et représentant un passage de roue ;
- les figures 7 à 9 représentent un mode de réalisation dans lequel le canal longitudinal est ouvert à sa partie inférieure et délimité par des parois latérales formant bavettes ; et
- les figures 10 à 12 représentent le dispositif séparateur d'eau.

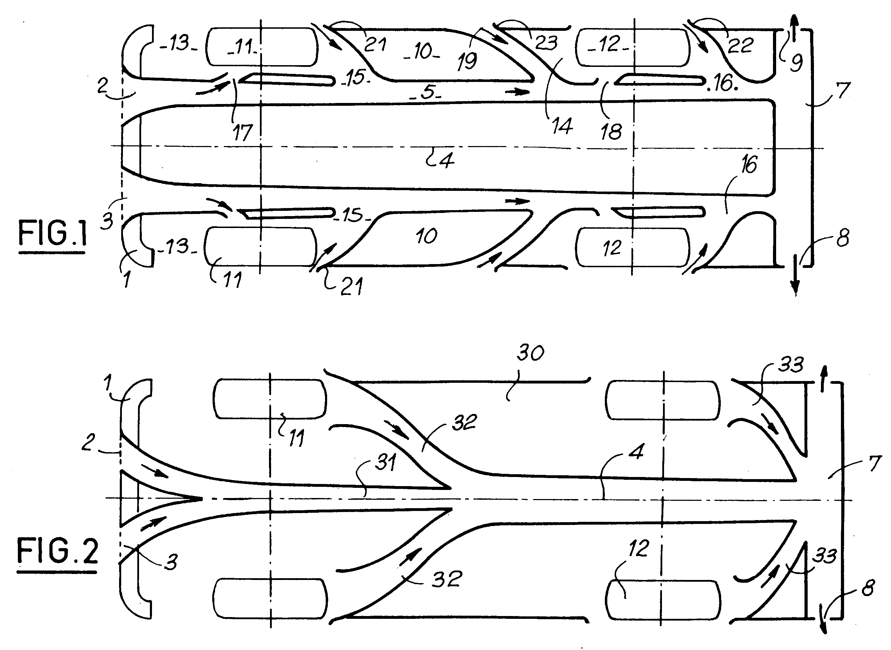

La figure 1 représente de manière schématique en vue de dessus un véhicule comportant un dispositif anti-projections selon l'invention.

Dans un déflecteur avant 1, disposé par exemple sous le pare-choc, sont aménagées deux prises d'air 2 et 3 disposées symétriquement par rapport à l'axe longitudinal 4 du véhicule. Chacune de ces prises d'air 2 et 3 débouche dans un canal longitudinal 5, respectivement 6, qui s'étend sur toute la longueur du véhicule. A son extrémité opposée à la prise d'air 2, respectivement 3, chaque canal longitudinal 5, respectivement 6, débouche dans un séparateur 7 comportant une sortie 8 latérale pour l'air et une sortie 9 latérale disposée sur le côté opposé pour la sortie de l'eau.

Les roues avant 11 et arrière 12 sont disposées respectivement dans des logements 13 et 14 constituant des passages de roues. Conformément à la présente invention, les passages de roues 13 et 14 comportent dans leurs zones arrière en arrière de la roue 11, respectivement 12, un conduit 15, respectivement 16, qui débouche dans le canal 5, respectivement 6, et constitue un capteur d'eau par dépression à effet Venturi.

Les passages de roues 13 et 14 comportent également un conduit pulseur 17, respectivement 18, qui relie le canal longitudinal 5, respectivement 6, au passage de roue 13, respectivement 14 en amont du conduit capteur 15, respectivement 16 correspondant.

Le dispositif anti-projections comporte également, pour chaque canal longitudinal 5, respectivement 6, une entrée d'air latérale 19 disposée par exemple entre les deux essieux du véhicule en avant du passage 14 de la roue arrière 12.

Des becquets 21, respectivement 22, sont disposés sur la paroi latérale du véhicule à l'extrémité arrière des passages de roues 13 respectivement 14. Un becquet 23 est également prévu à la face arrière de l'entrée d'air latérale 19.

La figure 2 représente un deuxième mode de réalisation dans lequel les deux entrées d'air 2 et 3 sont reliées à un seul canal transversal 31 disposé le long de l'axe transversal 4. On retrouve dans ce mode de réalisation des conduits 32, respectivement 33, constituant des capteurs d'eau par dépression et les becquets 21 et 22.

Dans ces deux modes de réalisation, le véhicule comporte un dispositif d'anti-encastrement 10 (figure 1), respectivement 30 (figure 2), disposé entre les deux roues avant 11 et arrière 12 du véhicule. Avantageusement, les canaux longitudinaux et certains des conduits sont constitués par des parois du dispositif anti-encastrement 10, respectivement 30, le dispositif selon l'invention étant partiellement intégré dans le dispositif anti-encastrement.

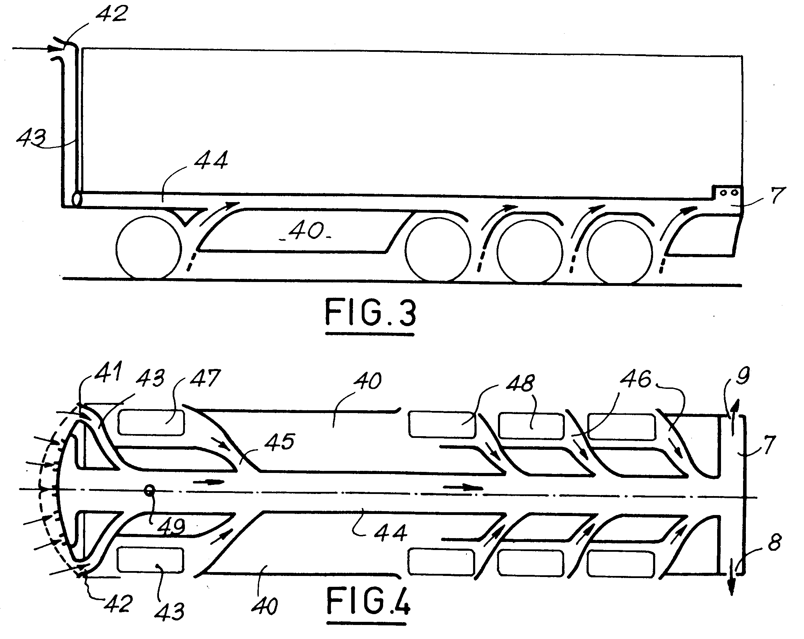

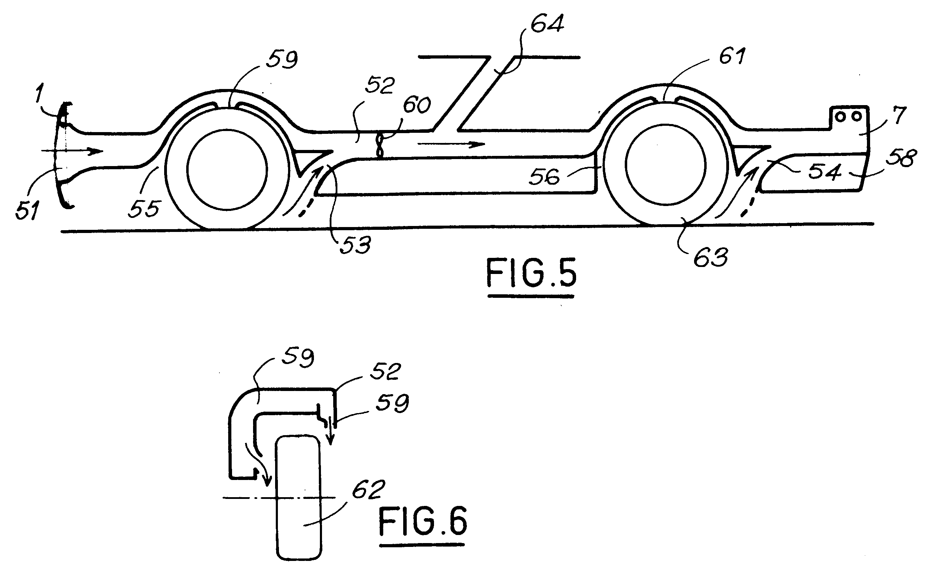

Les figures 3 et 4 représentent une semi-remorque équipée d'un dispositif anti-projection conforme à l'invention ; la figure 3 est une vue schématique de profil et la figure 4 et une vue schématique de dessus. Les prises d'air principales 41 et 42 sont toujours disposées à l'avant de la remorque mais dans la partie supérieure de cette dernière par exemple dans un déflecteur économiseur d'énergie et elles sont reliées par un conduit descendant 43 à un canal transversal axial unique 44. Dans ce canal longitudinal 44 débouchent des conduits capteurs d'eau 45 pour la roue arrière 47 du tracteur et 46 pour les roues 48 de la semi-remorque. On voit sur la figure 4 l'axe 49 de la sellette du véhicule tracteur. La semi-remorque comporte également un dispositif anti-encastrement 40 dont certaines parois constituent les parois du canal longitudinal 44 ou des capteurs 45 et 46.

La figure 5 représente schématiquement en vue de profil un autre mode de réalisation de l'invention et la figure 6 est une vue partielle de la roue avant gauche du véhicule de la figure 5. Dans ce mode de réalisation, une entrée d'air 51 aménagée dans le déflecteur avant 1 alimente un canal longitudinal 52 dans lequel débouchent des conduits capteurs d'eau 53 et 54 disposés à l'arrière des passages de roues avant 55 et arrière 56. Les dispositifs anti-encastrement 57 et 58 constituent certaines parois du canal 52 et des capteurs d'eau 53 et 54.

Dans ce mode de réalisation, on prévoit, au niveau de chaque essieu, une tubulure de dérivation 59, respectivement 61, qui sert à prélever de l'air dans le canal transversal 52 en direction du moyeu de la roue 62, respectivement 63. Comme on peut le voir sur la figure 6, l'air provenant de ces tubulures de dérivation est envoyé vers le moyeu et le frein de la roue 62.

Sur la figure 5 on voit également une tubulure de dérivation 64 qui sert à prélever de l'air dans le canal longitudinal 52 et à l'amener à un dispositif de chauffage et/ou de refroidissement de l'habitacle du véhicule.

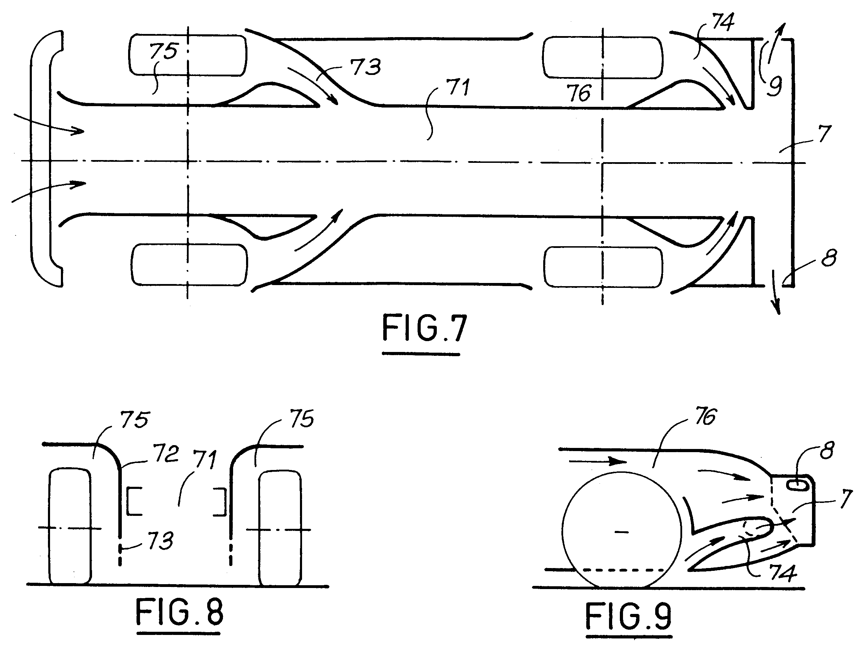

Les figures 7 à 9 illustrent un mode de réalisation dans lequel le canal longitudinal central 71 est ouvert à son extrémité inférieure et délimité par des parois latérales pouvant constituer des bavettes. Comme on peut le voir en particulier sur la figure 8, qui est une vue partielle transversale, le canal longitudinal 71 unique est délimité par des parois latérales 72 dont la partie inférieure 73 constitue une bavette souple. Des conduits capteurs d'eau 73 et 74 relient respectivement les passages de roues avant 75 et arrière 76 au canal central longitudinal 71.

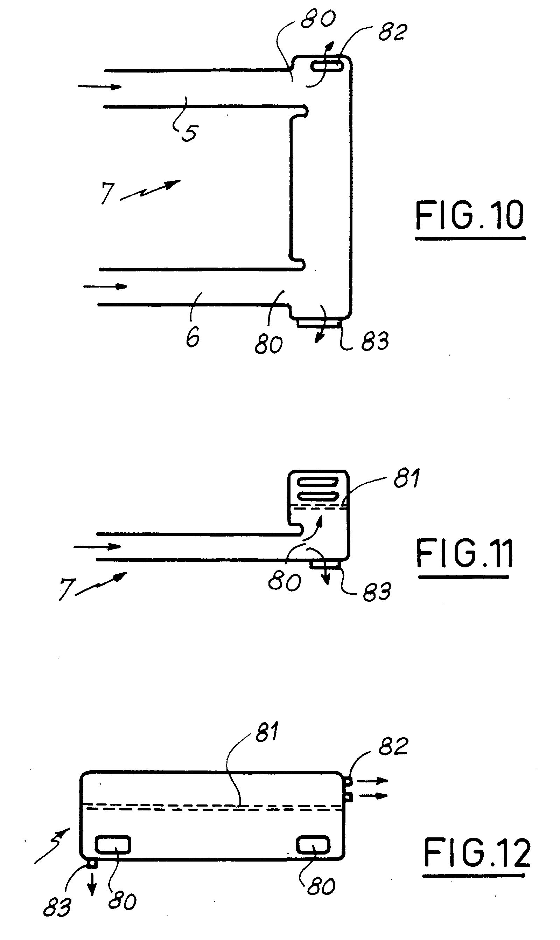

Les figures 10 à 12 représentent schématiquement en vue de dessus, en vue de profil et en vue arrière le séparateur du mélange air et eau 7 ; ce séparateur reçoit le mélange d'eau pulvérisé fourni par les deux canaux transversaux 5 et 6 qui correspondent au mode de réalisation de la figure 1. Ce séparateur, de type connu, comporte une grille horizontale 81 de séparation, un orifice latéral supérieur 82 disposé au-dessus de la grille 81 et servant à l'évacuation de l'air et un orifice latéral 83 disposé de l'autre côté de l'orifice 82 par rapport à l'axe du véhicule en dessous de la grille 81 dans la partie inférieure du séparateur 7 et destiné à l'évacuation de l'eau après séparation au niveau de la grille 81. Les orifices d'entrée 80 du mélange d'air et d'eau sont disposés en dessous de la grille de séparation 81.

Selon une caractéristique de l'invention, on prévoit dans le canal longitudinal des moyens d'augmentation de la vitesse de l'air circulant dans ce canal. Ces moyens peuvent être constitués par un rétrécissement de la section du canal vers l'arrière du véhicule ; selon un autre mode de réalisation, on utilise une pompe d'accélération 60 disposée dans le canal 52 (voir figure 5).

Le fonctionnement du dispositif anti-projections selon l'invention est le suivant. L'air est prélevé par les entrées d'air 1,2,42 ou 52 et est canalisé dans le ou les canaux longitudinaux. Du fait de la vitesse du véhicule, l'air se trouvant dans le canal est soumis à une surpression ce qui permet une aspiration de l'eau soulevée par les roues dans les passages de roues ; cette eau est aspirée par les conduits capteurs d'eau et envoyée dans le ou les canaux longitudinaux où il se crée un mélange d'air et d'eau, l'eau se trouvant sous forme pulvérisée.

L'ensemble du mélange d'air et d'eau créé et collecté dans le ou les canaux longitudinaux est envoyé dans le séparateur 7 où l'eau est séparée de l'air grâce à la grille 81 ; l'air séparé de l'eau est évacué latéralement par l'ouverture 9 ou 82 alors que l'eau séparée reste à la partie inférieure du séparateur et est évacuée par l'orifice latéral 8 ou 83.

Les conduits pulseurs 17 et 18 constituent des pulseurs directionnels qui favorisent l'extraction de l'eau par les conduits capteurs d'eau. L'arrivée d'air s'effectuant par l'entrée latérale 19 accélère le mouvement de l'air dans les canaux 5 et 6.

Les conduits pulseurs 17,18,59 et 61 prélèvent de l'air dans le ou les canaux longitudinaux et l'envoient sur les éléments à refroidir de chaque roue, tels que le frein ou le moyeu.

Les becquets servent de déflecteurs d'air pour faciliter l'entrée de l'air sous pression ou pour dévier l'air à l'avant des ailes.

Comme indiqué sur la figure 5, la vitesse de l'air dans le canal longitudinal est accélérée, par exemple au moyen de la pompe de circulation 60 de manière à améliorer la surpression dans le canal et par suite l'effet d'aspiration des conduits capteurs d'eau par effet Venturi.

Comme cela a été représenté sur la figure 5, on peut également prélever de l'air dans le canal 52 au moyen de la tubulure de dérivation 64, l'air fourni par cette dérivation 64 servant par exemple au chauffage ou au conditionnement de l'habitacle du véhicule.

Le dispositif anti-projections selon l'invention peut être réalisé directement lors de la fabrication du véhicule et, dans ce cas, il est de préférence intégré aux autres éléments de carrosserie du véhicule, en particulier aux ailes et aux dispositifs anti-encastrement.

Le dispositif selon l'invention peut également constituer un ensemble d'adaptation pouvant être monté sur des véhicules existants. Dans ce cas, on peut par exemple prévoir des dispositifs anti-projections pouvant être montés sur des véhicules équipés d'ailes normales ou dont les ailes ont été enlevées.

On voit que l'invention permet de récupérer les projections d'eau des différentes roues d'un véhicule et de séparer le mélange obtenu de telle sorte que l'eau s'écoule à la sortie du séparateur sous la forme d'un filet d'eau qui ne gêne pas les conducteurs des autres véhicules.

En fait l'invention consiste à canaliser l'air en surpression passant sous le véhicule et à utiliser cette surpression pour entraîner les projections d'eau dans le séparateur.

La description ci-dessus n'a été fournie qu'à titre d'exemples non limitatif et il est évident que l'on peut y apporter des modifications et variantes sans pour autant sortir du cadre de la présente invention. En particulier, dans le cas de véhicule articulé, on peut prévoir des prises d'air à l'avant du véhicule tracteur et alimentant un premier canal longitudinal du véhicule tracteur dont la sortie est reliée à un canal longitudinal du véhicule remorqué, la liaison entre les deux canaux étant réalisée au moyen d'un conduit souple.

## Revendications

1. Dispositif destiné à réduire ou éliminer les projections d'eau ou de neige par les roues (11,12;47, 48;62,63;75,76) d'un véhicule, caractérisé en ce qu'il comprend au moins une prise d'air (2,3;42;51) débouchant dans au moins un canal longitudinal (5,6;31;44;52;71) collecteur d'eau auquel la zone arrière de chaque passage de roue (13,14;55,56;74,75) est reliée par au moins un conduit (15,16;32,33;45;46;53,54;73,74) constituant un capteur d'eau par dépression.

2. Dispositif selon la revendication 1, caractérisé en ce que le canal longitudinal (5,6;31;44;52;71) débouche, à son extrémité opposée à la prise d'air (2,3;42;51), dans un séparateur (7-9,80-83) du mélange d'air et d'eau provenant des capteurs d'eau.

3. Dispositif selon la revendication 2, caractérisé en ce que le séparateur (7) comporte un orifice d'évacuation d'eau (8,83) débouchant sur le côté du véhicule.

4. Dispositif selon la revendication 2 ou 3, caractérisé en ce que le séparateur (7) est un séparateur à deux étages comportant une grille (81) de séparation horizontale, au moins un orifice d'entrée (80) du mélange air et eau disposé en dessous de ladite grille et relié au canal, un orifice de sortie de l'air (9,82) disposé au-dessus de ladite grille (81) et un orifice de sortie de l'eau (8,83) disposé au-dessous de ladite grille (81).

5. Dispositif selon l'une quelconque des revendications 1 à 4, caractérisé en ce qu'il comporte au moins un conduit pulseur (17,18;59,61) reliant le canal longitudinal (5,6;31;44;52;71) à au moins un passage de roue (13,14;55,56), ledit conduit pulseur étant disposé en amont du conduit (15,16;53,54) constituant le capteur d'eau du passage de roue par rapport à la direction de circulation de l'air dans le canal longitudinal.

6. Dispositif selon l'une quelconque des revendications 1 à 5, caractérisé en ce que le canal longitudinal comporte des moyens (60) d'augmentation de la vitesse de l'air dans le canal.

7. Dispositif selon la revendication 6, caractérisé en ce que les moyens d'augmentation de la vitesse de l'air sont constitués par au moins un rétrécissement de section du canal.

8. Dispositif selon la revendication 6, caractérisé en ce que les moyens d'augmentation de la vitesse de l'air sont constitués par une pompe d'accélération (60) disposée dans le canal longitudinal (52).

9. Dispositif selon l'une quelconque des revendications 1 à 8, caractérisé en ce que le canal longitudinal (52) comporte au moins une tubulure de dérivation (59,61) destinée au refroidissement d'éléments constitutifs du véhicule tels que des freins ou des moyeux.

10. Dispositif selon l'une quelconque des revendications 1 à 9, caractérisé en ce qu'il comporte au moins une prise d'air latérale auxiliaire (19) débouchant dans le canal longitudinal (5,6).

11. Dispositif selon l'une quelconque des revendications 1 à 10, caractérisé en ce qu'il comporte un seul canal longitudinal central (31;44;71).

12. Dispositif selon l'une quelconque des revendications 1 à 10, caractérisé en ce qu'il comporte deux canaux longitudinaux latéraux (5,6) à chacun desquels sont raccordés les capteurs d'eau des roues d'un côté du véhicule.

13. Dispositif selon l'une quelconque des revendications 1 à 12, destiné à un véhicule articulé formé d'au moins deux éléments, caractérisé en ce qu'il comporte au moins un conduit souple raccordant entre eux les canaux longitudinaux d'éléments voisins du véhicule.

14. Dispositif selon l'une quelconque des revendications 1 à 13, caractérisé en ce que le canal longitudinal (71) est ouvert à sa partie inférieure et délimité par des parois latérales (72,73).

15. Dispositif selon l'une quelconque des revendications 1 à 14, destiné à un véhicule comportant des dispositifs d'anti-encastrement (10;30), caractérisé en ce que le canal longitudinal (5,6;31) est au moins partiellement intégré dans au moins un dispositif d'anti-encastrement (10;30).

16. Dispositif selon l'une quelconque des revendications 1 à 15, caractérisé en ce qu'il comporte au moins un becquet (21,22) déflecteur d'air disposé sur certaines des entrées d'air et/ou sur certaines entrées du capteur d'eau.

17. Dispositif selon l'une quelconque des revendications 1 à 16, caractérisé en ce que la prise d'air (2,3) est aménagée dans un déflecteur d'air (1) disposé à l'avant du véhicule.
